# EUROPÄISCHE PATENTSCHRIFT

(11) **EP 3 759 052 B1**
(45) Veröffentlichungstag und Bekanntmachung des Hinweises auf die Patenterteilung: **05.07.2023**
(21) Anmeldenummer: 19708982.4
(22) Anmeldetag: 26.02.2019
(51) Int. Cl.: C02F 1/28, C02F 1/52, C02F 1/54, C08F 299/00, C07F 7/12, C07F 7/21, C08G 77/04, C08L 83/06, C02F 103/00, C02F 103/06, C02F 103/08, C02F 101/30

(54) **VERWENDUNG VON ALKYLTRICHLORSILANEN ZUR ENTFERNUNG VON MIKROPLASTIK-PARTIKELN AUS WASSER UND/ODER EINEM GEWÄSSER**
USE OF ALKYL-TRICHLOROSILANES FOR THE REMOVAL OF MICROPLASTIC PARTICLES FROM WATER AND/OR A BODY OF WATER
UTILISATION D'ALKYLTRICHLOROSILANES POUR ÉLIMINER DES PARTICULES DE MICROPLASTIQUE DE L'EAU ET/OU D'UN COURS D'EAU

(30) Priorität: 02.03.2018 DE 102018203185
(43) Veröffentlichungstag der Anmeldung: 06.01.2021
(73) Patentinhaber: ABCR GmbH, 76187 Karlsruhe (DE)
(72) Erfinder: HERBORT, Adrian Frank, 37339 Leinefelde-Worbis OT Kirchohmfeld (DE); SCHUHEN, Katrin, 76187 Karlsruhe (DE)
(74) Vertreter: Patentanwälte Ruff, Wilhelm, Beier, Dauster & Partner mbB
(86) Internationale Anmeldenummer: PCT/EP2019/054756
(87) Internationale Veröffentlichungsnummer: WO 2019/166442

(56) Entgegenhaltungen:
- DE-A1-102015 207 061
- US-A1- 2003 159 997
- US-A1- 2016 263 552
- HERBORT ADRIAN FRANK ET AL: "A concept for the removal of microplastics from the marine environment with innovative host-guest relationships", ENVIRONMENTAL SCIENCE AND POLLUTION RESEARCH INTERNATIONAL, ECOMED, LANDSBERG, DE, Bd. 24, Nr. 12, 16. Juli 2016 (2016-07-16) , Seiten 11061-11065, XP036211874, ISSN: 0944-1344, DOI: 10.1007/S11356-016-7216-X [gefunden am 2016-07-16]
- TALVITIE JULIA ET AL: "Solutions to microplastic pollution - Removal of microplastics from wastewater effluent with advanced wastewater treatment technologies", WATER RESEARCH, ELSEVIER, AMSTERDAM, NL, Bd. 123, 2. Juli 2017 (2017-07-02), Seiten 401-407, XP085179585, ISSN: 0043-1354, DOI: 10.1016/J.WATRES.2017.07.005

## Beschreibung

### ANWENDUNGSGEBIET UND STAND DER TECHNIK

Die wesentlichen Merkmale der Erfindung befinden sich in dem Verwendungsanspruch 1, Verfahrensanspruch 9, Erzeugnisanspruch 11 und Verwendungsanspruch 12. Weitere, bevorzugte Ausführungsformen sind in den abhängigen Ansprüchen 2-8, 10 beschrieben.

Die Problematik der Mikroplastikkontamination erlangt zunehmend Aufmerksamkeit in der Gesellschaft.

Die Quellen und Eintragspfade für Kunststoffe in die Umwelt sind vielfältig. Durch direkten Eintrag (sogenannter primärer Eintrag) gelangen beispielsweise Mikropartikel aus Kosmetika oder durch Waschmaschinenabrieb von synthetischen Fasern in das Abwasser. Zusätzlich sind Mikropartikel potentielle Träger für Schadstoffe und Bakterien, welche auch pathogene Eigenschaften besitzen können.

Je nach Partikeldurchmesser erfolgt die Partikelelimination in Kläranlagen individuell. Die Entfernung von Partikeln mit einem Durchmesser bzw. einer Größe > 5 mm erfolgt üblicherweise mittels Rechen- und Sandfang. Anders verhält es sich bei Partikeln, welche in geringen Konzentrationen und in einem Größenbereich < 5 mm, insbesondere in einem Größenbereich von 0,01 µm bis 1 µm, vorliegen, da diese in der Regel ungeladen sind und mithin nicht zu ionischen Wechselwirkungen tendieren.

Diese inerten Kleinstpartikel passieren aufgrund ihrer geringen Größe leichter und teilweise ungehindert die Reinigungsstufen einer Abwasserbehandlungsanlage, da sie weder durch Fällungsreagenzien abgetrennt noch durch Flockungsmittel in Makroflocken überführt werden können. Im Falle von Mikroplastik-Partikel kommt erschwerend hinzu, dass diese in der Regel eine geringere Dichte aufweisen als Wasser und daher ohnehin nicht zur Sedimentation neigen. Resultierend verlassen diese Partikel die Abwasserbehandlungsanlage gemeinsam mit dem gereinigten Abwasser und gelangen somit in den Wasserkreislauf.

Über diesen Weg kommt es zu ihrer Verteilung im Ökosystem mit unter Umständen weitreichenden Auswirkungen (beispielsweise Bioakkumulation) für Tiere und Menschen.

Aktuell existiert eine Vielzahl von Möglichkeiten, eine Fest-Flüssig-Trennung zur Eliminierung von Partikeln aus Wasser durchzuführen. Die entsprechenden Verfahren besitzen jedoch limitierende Faktoren. Entweder ist die Effektivität, wie beispielsweise im Falle von Sedimentation und Flockung, zu gering und das Verfahren zu unflexibel. Oder es müssen, wie im Falle der Tiefenfiltration, Mikrofiltration und Ultrafiltration, zusätzlich Chemikalien in das Abwasser eingebracht werden, welche nachweislich einen Einfluss auf die Umwelt haben oder eine effiziente Sekundärstoffverwertung oder Materialgewinnung verhindern. Weiterhin sind die Verfahren durch hohe Anschaffungs- und Betriebskosten gekennzeichnet und benötigen zusätzliche Infrastruktur. Einige, relevante Dokumente des Standes der Technik sind z.B. DE 10 2015 207061 A, US 2016/263552 A1, US 2003/159997 A1 und Herbort Adrian Frank et al.: "A concept for the removal of microplastics from the marine environment with innovative host-guest relationships", Environmental Science and Pollustion Research Int. Ecomed, Bd. 24, Nr. 12, 16-07-2016.

### AUFGABE UND LÖSUNG

Die Erfindung stellt sich daher die Aufgabe, Verbindungen bereitzustellen, welche die Entfernung von Mikroplastik-Partikeln aus Wasser und/oder Gewässern ermöglichen. Des Weiteren stellt sich die Erfindung die Aufgabe, ein entsprechendes Verfahren, eine Einschlussverbindung, ein Kit sowie eine Wasserbehandlungsanlage bereitzustellen.

Diese Aufgaben werden erfindungsgemäß gelöst durch eine Verwendung gemäß den Merkmalen des unabhängigen Anspruchs 1, durch ein Verfahren gemäß Anspruch 9, durch eine Einschluss- und/oder Inkalationsverbindung mit den Merkmalen des Anspruchs 11, durch Verwendung eines Kits gemäß Anspruch 12.

Gemäß einem ersten Aspekt betrifft die Erfindung die Verwendung eines Alkyltrichlorsilans der nachstehenden Formel I

R-SiCl₃ (Formel I),

wobei
R eine Alkylgruppe, Si ein Siliziumatom und CI ein Chloratom bedeuten,
zur Entfernung von Mikroplastik-Partikeln aus Wasser, insbesondere Abwasser und/oder Betriebswasser und/oder Sickerwasser und/oder Trinkwasser, und/oder einem Gewässer.

Der Ausdruck "ein Alkyltrichlorsilan" kann im Sinne der vorliegenden Erfindung ein Alkyltrichlorsilan (Einzahl) oder eine Vielzahl, insbesondere eine Mischung, unterschiedlicher Alkyltrichlorsilane bedeuten.

Unter dem Ausdruck "Mikroplastik-Partikel" sollen im Sinne der vorliegenden Erfindung Kunststoff-Partikel oder Kunststoff-Teilchen verstanden werden, welche einen Kunststoff oder eine Kombination, insbesondere Mischung (Blend), von Kunststoffen aufweisen oder aus einem Kunststoff oder einer Kombination, insbesondere Mischung (Blend), von Kunststoffen bestehen und einen Durchmesser, insbesondere mittleren Durchmesser, von 100 nm bis 5 mm aufweisen.

Unter dem Ausdruck "große Mikroplastik-Partikel" sollen im Sinne der vorliegenden Erfindung Kunststoff-Partikel oder Kunststoff-Teilchen mit einem Durchmesser, insbesondere mittleren Durchmesser, von größer 1 mm bis 5 mm verstanden werden.

Unter dem Ausdruck "kleine Mikroplastik-Partikel" sollen im Sinne der vorliegenden Erfindung Kunststoff-Partikel oder Kunststoff-Teilchen mit einem Durchmesser, insbesondere mittleren Durchmesser, von 100 nm bis 1 mm verstanden werden.

Unter dem Ausdruck "Wasser" soll im Sinne der vorliegenden Erfindung jede Form von Wasser, in der Regel von flüssigem Wasser, und/oder jede Form einer wässrigen Flüssigkeit, d.h. einer Wasser enthaltenden Flüssigkeit, verstanden werden. insbesondere kann es sich bei dem Wasser im Sinne der vorliegenden Erfindung, wie oben bereits erwähnt, um Abwasser und/oder Betriebswasser und/oder Sickerwasser und/oder Trinkwasser handeln.

Unter dem Ausdruck "Abwasser" soll im Sinne der vorliegenden Erfindung ein durch Gebrauch verunreinigtes oder in seinen Eigenschaften oder seiner Zusammensetzung verändertes Wasser verstanden werden. Erfindungsgemäß sollen hierunter insbesondere Grauwasser und/oder Regenwasser und/oder Schwarzwasser und/oder Gelbwasser und/oder Braunwasser und/oder Niederschlagswasser und/oder beispielsweise durch bauliche Schäden anfallendes Fremdwasser, welches in die Kanalisation gelangt, verstanden werden.

Unter dem Ausdruck "Grauwasser" soll im Sinne der vorliegenden Erfindung (und in Übereinstimmung mit der europäischen Norm 12056-1) fäkalienfreies, gering verschmutztes Abwasser, wie es beispielsweise beim Duschen, Baden oder Händewaschen anfällt, aber auch aus der Waschmaschine kommt, und zur Aufbereitung zu Brauch- bzw. Betriebswasser dienen kann, verstanden werden.

Unter dem Ausdruck "Regenwasser" soll im Sinne der vorliegenden Erfindung zuvor verdunstetes Wasser aus Niederschlägen in flüssiger Form, dem Regen, verstanden werden.

Unter dem Ausdruck "Schwarzwasser" soll (in Übereinstimmung mit ISO 6107-7:1997) häusliches Abwasser ohne Grauwasser mit fäkalen Feststoffen verstanden werden.

Unter dem Ausdruck "Gelbwasser" soll im Sinne der vorliegenden Erfindung Urin und Urin mit Spülwasser verstanden werden.

Unter dem Ausdruck "Braunwasser" soll im Sinne der vorliegenden Erfindung Abwasser verstanden werden, welches nur Fäzes, Spülwasser und Toilettenpapier enthält.

Unter dem Ausdruck "Betriebswasser" soll im Sinne der vorliegenden Erfindung Wasser verstanden werden, welches einer spezifischen technischen, gewerblichen, landwirtschaftlichen oder hauswirtschaftlichen Anwendung dient. Betriebswasser ist anders als Trinkwasser nicht für den menschlichen Genuss vorgesehen, sollte jedoch einer gewissen Mindesthygiene entsprechen. In jedem Fall muss es den technologischen Anforderungen des jeweiligen Prozesses genügen.

Unter dem Ausdruck "Sickerwasser" soll im Sinne der vorliegenden Erfindung unterirdisches Wasser verstanden werden, welches sich unter der Einwirkung von Schwerkraft abwärts bewegt (sogenannte Sickerströmung).

Unter dem Ausdruck "Trinkwasser" soll im Sinne der vorliegenden Erfindung jedes Wasser verstanden werden, das zum Trinken, zum Kochen, zur Zubereitung von Speisen und Getränken sowie insbesondere zu häuslichen Zwecken, wie beispielsweise Körperpflege und - reinigung, Reinigung von Gegenständen, die bestimmungsgemäß mit Lebensmitteln in Berührung kommen (wie beispielsweise Gläser, Geschirr, Bestecke) sowie Reinigung von Gegenständen, die bestimmungsgemäß nicht nur vorübergehend mit dem menschlichen Körper in Kontakt kommen (wie beispielsweise Kleidung und Wäsche), bestimmt ist, verstanden werden.

Unter dem Ausdruck "Gewässer" soll im Sinne der vorliegenden Erfindung ein in der Natur fließendes oder stehendes Wasser, insbesondere Süßwasser und/oder Salzwasser und/oder Brackwasser, verstanden werden. Je nach Lage des Gewässers kann es sich hierbei um ein offenes Gewässer, d.h. ein über der Erde liegendes Gewässer, oder um ein geschlossenes Gewässer, d.h. um ein unterirdisches Gewässer, wie beispielsweise Grundwasser, handeln. Weiterhin kann es sich bei dem Gewässer um ein Binnengewässer oder um ein Meer handeln. Bei dem Binnengewässer kann es sich insbesondere um ein Fließgewässer, wie beispielsweise einen Strom (sehr großes Fließgewässer, welches in ein Meer mündet), einen Fluss (großes Fließgewässer), einen Bach (kleines Fließgewässer), einen Kanal (Wasserlauf mit künstlich hergestelltem Wasserbett), einen Höhlenfluss (Fließgewässer in einer Wasserhöhle), Kluftwasser, Wasserleitungen (künstliche Gewässer) oder um groß dimensionierte Bauwerke der Wasserver- und/oder -entsorgung (künstliche Gewässer), oder um ein Stillgewässer, wie beispielsweise einen See (größere Wasseransammlung), einen Stausee (künstliches Gewässer), einen Weiher (kleines und mäßig tiefes Gewässer ohne Zu- und Abfluss), einen Teich (kleines und mäßig tiefes Gewässer mit Zu- und Abfluss (künstliches Gewässer), einen Tümpel (regelmäßig austrocknendes Gewässer), eine Pfütze (kurzzeitiges stehendes Wasser), einen Höhlensee, oder eine Zisterne (künstliches Gewässer) handeln.

Unter dem Ausdruck "Süßwasser" soll im Sinne der vorliegenden Erfindung Wasser verstanden werden, welches unabhängig von seinem Aggregatzustand keine Salze oder einen Salzgehalt (sogenannte Salinität) < (gesprochen: kleiner) 0,1 % (Massenanteil) aufweist.

Unter dem Ausdruck "Salzwasser" soll im Sinne der vorliegenden Erfindung Wasser mit einem Salzgehalt (Salinität) von wenigstens 1 % (Massenanteil) verstanden werden.

Unter dem Ausdruck "Meerwasser" soll im Sinne der vorliegenden Erfindung Wasser mit einem Salzgehalt (Salinität), insbesondere durchschnittlichen Salzgehalt, von 3,5 % (Massenanteil) verstanden werden.

Unter dem Ausdruck "Brackwasser" soll im Sinne der vorliegenden Erfindung See- oder Meerwasser mit einem Salzgehalt (Salinität) von 0,1 % bis < 1 % (Massenanteil) verstanden werden.

Unter dem Ausdruck "Meer" sollen im Sinne der vorliegenden Erfindung miteinander verbundene Gewässer der Erde, welche die Kontinente umgeben, verstanden werden, einschließlich der sogenannten Nebenmeere, welche von den freien Meeren mehr oder wenig abgetrennt sind. Beispiele für Nebenmeere sind das Randmeer (Trennung durch Inselketten oder Meeresschwellen), Mittelmeer (Trennung durch Inselketten, Festland oder Meeresschwellen) sowie das Binnenmeer (Verbindung durch eine Meerenge).

Unter dem Ausdruck "Hybridkieselgel" soll im Sinne der vorliegenden Erfindung ein Gel, insbesondere ein makromolekulares Gel, mit Silizium-Sauerstoff-Bindungen und Silizium-Kohlenstoff-Bindungen verstanden werden. Aufgrund der Anwesenheit von "anorganischen" Siliziumbindungen (Silizium-Sauerstoff-Bindungen und/oder Silizium-Sauerstoff-SiliziumBindungen) und "organischen" Siliziumbindungen (Silizium-Kohlenstoff-Bindungen) kann ein derartiges Hybridkieselgel auch als anorganisch-organisches Hybridkieselgel bezeichnet werden.

Unter dem Ausdruck "Einschluss- und/oder Inkalationsverbindung" soll im Sinne der vorliegenden Erfindung eine Verbindung oder ein System verstanden werden, welche/welches ein Hybridkieselgel und Mikroplastik-Partikel, insbesondere agglomerierte Mikroplastik-Partikel, aufweist, wobei das Hybridkieselgel durch Umsetzung eines Alkyltrichlorsilans und/oder Silsesquioxans, insbesondere eines erfindungsgemäß vorgesehenen Alkyltrichlorsilans und/oder Silsesquioxans, in Wasser oder einem Gewässer gebildet oder hergestellt ist und wobei das Hybridkieselgel die Mikroplastik-Partikel, insbesondere die agglomerierten Mikroplastik-Partikel, wenigstens teilweise, insbesondere nur teilweise oder vollständig, einschließt oder umgibt. Eine solche Einschluss- und/oder Inkalationsverbindung kann im Sinne der vorliegenden Erfindung auch als Agglomerationsverbindung oder -system bezeichnet werden, da die Einschluss- und/oder Inkalationsverbindung im Ergebnis, worauf im Folgenden noch näher eingegangen werden wird, eine Agglomeration von Mikroplastik-Partikeln beinhaltet.

Bei den Mikroplastik-Partikeln handelt es sich vorzugsweise um inerte, d.h. reaktionsträge, und/oder hydrophobe, d.h. wasserunlösliche, Mikroplastik-Partikel.

Die Mikroplastik-Partikel können grundsätzlich einen Durchmesser, insbesondere mittleren Durchmesser, von > (gesprochen: größer) 1 mm bis 5 mm (sogenannte große Mikroplastik-Partikel) und/oder einen Durchmesser, insbesondere mittleren Durchmesser, von 100 nm bis 1 mm (sogenannte kleine Mikroplastik-Partikel) aufweisen.

Der Durchmesser, insbesondere mittlere Durchmesser, von Mikroplastik-Partikeln kann beispielsweise mikroskopisch oder rasterelektronenmikroskopisch, insbesondere mittels ESEM (Environmental Scanning Electron Microscope), bestimmt werden.

Die Erfindung basiert auf dem überraschenden Befund, dass Alkyltrichlorsilane zur Entfernung oder Elimination von Mikroplastik-Partikeln aus Wasser und/oder einem Gewässer verwendet werden können. Dabei findet über die Alkylgruppen der Alkyltrichlorsilane mit besonderem Vorteil in einem ersten Schritt eine Lokalisation von in Wasser und/oder einem Gewässer verteilten Mikroplastik-Partikeln und in einem zweiten Schritt eine Agglomeration der lokalisierten Mikroplastik-Partikel statt. Insoweit kann das erfindungsgemäß vorgesehene Alkyltrichlorsilan auch als Agglomerationsreagenz oder -bildner bezeichnet werden.

Der Lokalisationsschritt basiert auf inert-inert (und mithin "adhäsiven") Wechselwirkungen, insbesondere Van-der-Waals-Wechselwirkungen und/oder hydrohoben Wechselwirkungen, zwischen der Alkylgruppe des Alkyltrichlorsilans und den Mikroplastik-Partikeln, insbesondere der Oberfläche der Mikroplastik-Partikel. Im Zuge des Lokalisationsschrittes kommt es zu einer Ansammlung/Adsorption von Alkyltrichlorsilanmolekülen auf der Oberfläche der Mikroplastik-Partikel, wodurch die Voraussetzungen für eine anschließende Agglomeration der lokalisierten Mikroplastik-Partikel geschaffen werden. Durch inert-inert Wechselwirkungen, insbesondere Van-der-Waals-Wechselwirkungen und/oder hydrohobe Wechselwirkungen, zwischen den Alkyltrichlorsilanmolekülen lokalisierter Mikroplastik-Partikel wird deren Agglomeration induziert und insbesondere unterstützt. Die auf diese Weise lokalisierten und insbesondere agglomerierten Mikroplastik-Partikel werden sodann durch die Ausbildung eines Hybridkieselgels wenigstens teilweise, insbesondere nur teilweise oder vollständig, eingeschlossen, wodurch eine Dismigration und/oder Deagglomeration und/oder Leaching der Mikroplastik-Partikel verhindert werden/wird. Der Einschluss der Mikroplastik-Partikel kann dabei in vorteilhafter Weise mit einer weiteren Agglomeration der Mikroplastik-Partikel einhergehen.

Die Ausbildung des Hybridkieselgels basiert auf einer Hydrolyse des Alkyltrichlorsilans in Wasser und/oder einem Gewässer und einer anschließenden Kondensationsreaktion, insbesondere nach Art eines Sol-Gel-Prozesses.

Im Falle des Alkyltrichlorsilans entstehen durch Hydrolyse der Silizium-Chlor-Bindungen unter Freisetzung von Salzsäure Alkylsilanolverbindungen, welche aufgrund einer geringen Stabilität und insbesondere aufgrund einer Katalyse durch die freigesetzte Salzsäure zügig unter Ausbildung von Siloxanbindungen zu einem Hybridkieselgel, insbesondere einem makromolekularen Hybridkieselgel, kondensieren. Die drei labilen Silizium-Chlor-Bindungen des Alkyltrichlorsilans ermöglichen dabei mit besonderem Vorteil die Ausbildung eines für den Einschluss von Mikroplastik-Partikeln, insbesondere agglomerierten Mikroplastik-Partikeln, erforderlichen dreidimensionalen Hybridkieselgels.

Das schlussendlich in Wasser und/oder einem Gewässer entstehende Reaktionsprodukt kann als Einschluss- und/oder Inkalationsverbindung bezeichnet werden, wobei das Hybridkieselgel die Mikroplastik-Partikel, insbesondere die agglomerierten Mikroplastik-Partikel, wenigstens teilweise, insbesondere nur teilweise oder vollständig, einschließt oder umgibt. Die erhaltenen Einschlussverbindungen und mithin die darin eingeschlossenen Mikroplastik-Partikel, insbesondere agglomerierte Mikroplastik-Partikel, können anschließend kostengünstig und effizient aus dem Wasser und/oder dem Gewässer entfern werden, beispielsweise mittels einfachen Filtrationsmethoden, wie beispielsweise Rechen- und/oder Sandfang in einer Abwasserbehandlungsanlage. Die Einschlussverbindungen können dabei, abhängig von der Reaktivität des Alkyltrichlorsilans und/oder der Reaktions- oder Kontaktzeit, variable Partikeldurchmesser, insbesondere variable mittlere Partikeldurchmesser, beispielsweise in einem Bereich von 1 cm bis 6 cm, aufweisen. Die Einschlussverbindungen können nach ihrer Entfernung aus dem Wasser und/oder dem Gewässer, sofern gewünscht, aufgeschlossen und qualitativ und/oder quantitativ analysiert und/oder die darin enthaltenen Mikroplastik-Partikel, insbesondere agglomerierten Mikroplastik-Partikel, einer Wiederverwertung zugeführt werden, beispielsweise thermische Zersetzung (Pyrolyse) und/oder Einsatz als Füllmaterial. Ein weiterer Vorteil der Einschlussverbindungen beseht in ihrer ökotoxikologischen Unbedenklichkeit.

Im Hinblick auf die in den vorherigen Absätzen beschriebenen Prozesse, welche der Entfernung von Mikroplastik-Partikeln aus Wasser und/oder einem Gewässer zugrunde liegen, hat sich weiterhin als insbesondere überraschend herausgestellt, dass die erfindungsgemäß vorgesehenen Alkyltrichlorsilane einerseits über eine (insbesondere aufgrund eines von der Alkylgruppe induzierten positiven Effektes, sogenannter +I-Effekt) ausreichende Anfangsstabilität in Wasser und/oder einem Gewässer verfügen, damit die für einen erfolgreichen Einschluss der Mikroplastik-Partikel vorgreiflichen Lokalisations- und/oder Agglomerationsschritte ablaufen können, und andererseits über eine in Wasser und/oder einem Gewässer ausreichende Reaktivität verfügen, damit ein Einschluss der Mikroplastik-Partikel aufgrund der Ausbildung eines Hybridkieselgels stattfinden kann, wodurch im Ergebnis eine Dismigration und/oder Deagglomeration und/oder Leaching der Mikroplastik-Partikel verhindert werden/wird.

Ein weiterer Vorteil von Alkyltrichlorsilanen besteht darin, dass es aufgrund ihrer Reaktivität in Wasser und/oder einem Gewässer, welche insbesondere in einer Katalyse durch die während der Hydrolyse freigesetzte Salzsäure begründet liegt, nicht zu einer Bioakkumulation des Alkyltrichlorsilans und/oder der intermediär entstehenden Silanolverbindungen in Wasser und/oder einem Gewässer kommt, so dass Alkyltrichlorsilane unter ökotoxikologischen Gesichtspunkten als unbedenklich einzustufen sind, wenigstens jedoch weitestgehend.

Das Alkyltrichlorsilan gemäß Formel I kann insbesondere zur Behandlung, bevorzugt Reinigung, kommunaler Abwässer verwendet werden.

Daneben kann das Alkyltrichlorsilan gemäß Formel I auch insbesondere zur Behandlung, bevorzugt Reinigung, industrieller Abwässer verwendet werden. Derartige Abwässer sind häufig durch einen extremen pH- Wert charakterisiert. Da sich der für die Ausbildung einer (makromolekularen) Hybridkieselgelstruktur verantwortliche Prozess, insbesondere Sol-Gel-Prozess, jedoch sowohl unter sauren pH-Wert-Bedingungen als auch unter alkalischen pH-Wert-Bedingungen katalysieren lässt, ist dies für eine Abtrennung von Mikroplastik-Partikel aus industriellen Abwässern unerheblich.

Ein weiterer genereller Vorteil bei Verwendung eines Alkyltrichlorsilans besteht darin, dass Wasseranteile in möglichen Anwendungsformen keinen störenden Einfluss ausüben. Eine partielle Hydrolyse oder Präpolymerisation des Alkyltrichlorsilans zu einem Hybridkieselgel kann sogar im Hinblick auf ein Einschlussverhalten gegenüber Mikroplastik-Partikeln förderlich sein. Sofern eine partielle Hydrolyse bzw. Präpolymerisation nicht gewünscht ist, kann das Alkyltrichlorsilan wasserfrei oder im Wesentlichen wasserfrei verpackt und entsprechend wasserfrei bzw. im Wesentlichen wasserfrei zur Anwendung kommen.

In Ausgestaltung der Erfindung handelt es sich bei dem Alkyltrichlorsilan um ein ungeträgertes Alkyltrichlorsilan, d.h. um ein Alkyltrichlorsilan, welches nicht mit einem Trägermaterial, wie beispielsweise Aktivkohle oder einem Polyurethanschwamm, verbunden ist oder, anders ausgedrückt, welches frei von einem Trägermaterial, wie beispielsweise Aktivkohle oder einem Polyurethanschwamm, ist. Insbesondere kann es sich bei dem Alkyltrichlorsilan um ein Alkyltrichlorsilan handeln, welches nicht auf der Oberfläche eines Trägermaterials, insbesondere weder auf einer äußeren Oberfläche noch auf einer inneren Oberfläche eines Trägermaterials, gebunden ist.

In weiterer Ausgestaltung der Erfindung ist R, d.h. die Alkylgruppe R in der Formel I eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen.

Besonders bevorzugt ist R, d.h. die Alkylgruppe R in der Formel I eine Alkylgruppe mit wenigstens 4 Kohlenstoffatomen. Insoweit hat sich gezeigt, dass ein durch einen solchen Alkylrest erzeugter positiver induktiver Effekt (+I-Effekt) besonders gut in der Lage ist, einem entsprechenden Alkyltrichlorsilan eine in Wasser und/oder einem Gewässer ausreichende Anfangsstabilität zu verleihen, damit die vor dem Einschluss von Mikroplastik-Partikeln ablaufenden Lokalisations- und/oder Agglomerationsvorgänge in ausreichendem Umfang stattfinden können.

Bevorzugt ist R, d.h. die Alkylgruppe R in der Formel I eine lineare Alkylgruppe, insbesondere mit wenigstens 4 Kohlenstoffatomen. Der im vorherigen Absatz erwähnte Vorteil gilt entsprechend.

Alternativ kann es bevorzugt sein, dass R, d.h. die Alkylgruppe R in der Formel I eine verzweigte Alkylgruppe, insbesondere eine monoverzweigte oder mehrfach verzweigte Alkylgruppe, ist. Bevorzugt weist die verzweigte Alkylgruppe wenigstens 4

Kohlenstoffatome auf. Eine verzweigte Alkylgruppe hat gegenüber einer linearen Alkylgruppe den zusätzlichen Vorteil, dass aufgrund einer stärkeren sterischen Abschirmung des Siliziumatoms sowie eines aufgrund der Verzweigung der Alkylgruppe stärkeren positiven induktiven Effekts die Anfangsstabilität eines entsprechenden Alkyltrichlorsilans und/oder Silsesquioxans in Wasser und/oder einem Gewässer zusätzlich erhöht werden kann, wodurch die für den Einschluss von Mikroplastik-Partikeln erforderlichen Prozesse der Lokalisation und/oder Agglomeration von Mikroplastik-Partikeln besonders gut ablaufen können.

In weiterer Ausgestaltung der Erfindung ist R, d.h. die Alkylgruppe R in der Formel I ausgewählt aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Insbesondere kann R, d.h. die Alkylgruppe R in der Formel I ausgewählt sein aus der Gruppe bestehend aus Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe, Hexadecylgruppe, Isomere davon und Isomerenmischungen davon.

Bevorzugt ist R, d.h. die Alkylgruppe R in der Formel I ausgewählt aus der Gruppe bestehend aus n-Butylgruppe, Isobutylgruppe (2-Methylpropylgruppe), n-Hexylgruppe, 2-Methylpentylgruppe, 3-Methylpentylgruppe, 2,2-Dimethylbutylgruppe, 2,3-Dimethylbutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

In weiterer Ausgestaltung der Erfindung ist R, d.h. die Alkylgruppe R in der Formel I ausgewählt aus der Gruppe bestehend aus n-Butylgruppe, Isobutylgruppe, n-Octylgruppe und 2,4,4-Trimethylpentylgruppe.

Insbesondere kann R, d.h. die Alkylgruppe R in der Formel I ausgewählt sein aus der Gruppe bestehend aus n-Butylgruppe, Isobutylgruppe, n-Octylgruppe, 2,4,4-Trimethylpentylgruppe, Isomere davon und Isomerenmischungen davon.

Bevorzugt ist R, d.h. die Alkylgruppe R in der Formel I ausgewählt aus der Gruppe bestehend aus n-Butylgruppe, Isobutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Besonders bevorzugt ist R, d.h. die Alkylgruppe R in der Formel I eine n-Butylgruppe. Mit anderen Worten ist es erfindungsgemäß besonders bevorzugt, wenn es sich bei dem Alkyltrichlorsilan gemäß Formel I um n-Butyltrichlorsilan um ein mit n-Butylgruppen funktionalisiertes Silsesquioxan handelt.

Weiterhin ist es besonders bevorzugt, wenn R, d.h. die Alkylgruppe R in der Formel eine Isobutylgruppe ist. Mit anderen Worten ist es erfindungsgemäß weiterhin besonders bevorzugt, wenn es sich bei dem Alkyltrichlorsilan gemäß Formel I um Isobutyltrichlorsilan (2-Methylpropyltrichlorsilan) andelt.

Weiterhin ist es besonders bevorzugt, wenn R, d.h. die Alkylgruppe R in der Formel I eine n-Octylgruppe ist. Mit anderen Worten ist es erfindungsgemäß weiterhin besonders bevorzugt, wenn es sich bei dem Alkyltrichlorsilan gemäß Formel I um n-Octyltrichlorsilan handelt.

Weiterhin ist es besonders bevorzugt, wenn R, d.h. die Alkylgruppe R in der Formel I eine 2,4,4-Trimethylpentylgruppe ist. Mit anderen Worten ist es erfindungsgemäß weiterhin besonders bevorzugt, wenn es sich bei dem Alkyltrichlorsilan gemäß Formel I um 2,4,4-Trimethylpentyltrichlorsilan, d.h. um Isooctyltrichlorsilan (CAS: 18379-25-4), handelt.

Die Verwendung von n-Butyltrichlorsilan und/oder Isobutyltrichlorsilan und/oder n-Octyltrichlorsilan und/oder 2,4,4-Trimethylpentyltrichlorsilan sind/ist erfindungsgemäß deswegen besonders bevorzugt, weil sie sich (jeweils) zum einen durch eine für den Ablauf der zuvor beschriebenen Lokalisations- und/oder Aggregationsvorgänge ausreichend hohe Anfangsstabilität in Wasser und/oder einem Gewässer auszeichnen. Dadurch sind/ist eine optimale Lokalisierung von Mikroplastik-Partikeln sowie insbesondere die Entstehung größerer Agglomerate von Mikroplastik-Partikeln und/oder die Entstehung einer größeren Anzahl von Mikroplastik-Partikel-Agglomeraten erzielbar. Zum anderen zeichnen sich insbesondere diese Alkyltrichlorsilanverbindungen durch eine ausreichend hohe Reaktivität aus, um basierend auf Hydrolyse- und Kondensationsreaktionen in Wasser und/oder einem Gewässer ein für den Einschluss von Mikroplastik-Partikeln taugliches Hybridkieselgel zu bilden.

In weiterer Ausgestaltung der Erfindung handelt es sich bei dem Alkyltrichlorsilan um einen Reinstoff, d.h. um einen einzigen Typ eines Alkyltrichlorsilans, oder um ein Gemisch, d.h. eine Mischung, verschiedener Alkyltrichlorsilane. Insbesondere kann es sich bei dem Alkyltrichlorsilan um ein Gemisch von isomeren Alkyltrichlorsilanen, bevorzugt um ein Gemisch von verzweigten isomeren Alkyltrichlorsilanen, handeln. Dadurch sind mit besonderem Vorteil zeit- und kostenintensive Aufreinigungsschritte entbehrlich. insbesondere kann es sich bei dem Alkyltrichlorsilan um ein Gemisch bzw. eine Mischung von wenigstens zwei verschiedenen Alklytrichlorsilanen handeln, welche vorzugsweise ausgewählt sind aus der Gruppe bestehend aus n-Butyltrichlorsilan, Isobutyltrichlorsilan, n-Octyltrichlorsilan und 2,4,4-Trimethylpentyltrichlorsilan. Bezüglich weiterer geeigneter Alkyltrichlorsilane sei vollständig auf die bisherige Beschreibung Bezug genommen.

In weiterer Ausgestaltung der Erfindung weisen die Mikroplastik-Partikel einen Kunststoff auf oder bestehen aus einem Kunststoff, welcher ausgewählt ist aus der Gruppe bestehend aus Polyethylen (PE) wie Polyethylen niedriger Dichte (LDPE) und/oder Polyethylen hoher Dichte (HDPE), Polypropylen (PP), Polystyrol (PS), Polyvinylchlorid (PVC), Polyurethan (PU), Polyamid (PA), Polycarbonat (PC), Polytetrafluorethylen (PTFE), Polyoxymethylen (PMO), Acrylnitril-Butadien-Styrol-Copolymer (ABS), Polyethylenterephthalat (PET), Polymethylmethacrylat (PMMA), Polyacrylnitril (PAN), Copolymere von wenigstens zwei der genannten Kunststoffe und Kombinationen, insbesondere Mischungen (Blends), von wenigstens zwei der genannten Kunststoffe.

In weiterer Ausgestaltung der Erfindung weisen die Mikroplastik-Partikel einen Durchmesser, insbesondere mittleren Durchmesser, von 100 nm bis 5 mm, insbesondere 10 µm bis 5 mm, bevorzugt 100 µm bis 1 mm, auf.

Gemäß einem zweiten Aspekt betrifft die Erfindung ein Verfahren zum Entfernen von Mikroplastik-Partikeln aus Wasser, insbesondere Abwasser und/oder Betriebswasser und/oder Sickerwasser und/oder Trinkwasser, und/oder einem Gewässer und/oder zum Behandeln, insbesondere Reinigen, von Wasser, insbesondere Abwasser und/oder Betriebswasser und/oder Sickerwasser und/oder Trinkwasser, und/oder eines Gewässers.

Das Verfahren weist folgende Schritte auf:
a) Dosieren oder Zugeben eines Alkyltrichlorsilans der nachstehenden Formel I

   R-SiCl₃ (Formel I),

   wobei
   R eine Alkylgruppe, Si ein Siliziumatom und CI ein Chloratom bedeuten,
   zu einem mikroplastikpartikelhaltigen Wasser, d.h. einem Wasser, welches Mikroplastik-Partikel, insbesondere inerte und/oder hydrophobe Mikroplastik-Partikel, enthält, und/oder einem mikroplastikpartikelhaltigen Gewässer, d.h. einem Gewässer, welches Mikroplastik-Partikel, insbesondere inerte und/oder hydrophobe Mikroplastik-Partikel, enthält, und
b) Entfernen von nach Zugeben des Alkyltrichlorsilans entstandenen Einschluss- und/oder Inkalationsverbindungen aus dem Wasser und/oder dem Gewässer, wobei die Einschluss- und/oder Inkalationsverbindungen jeweils ein Hybridkieselgel und Mikroplastik-Partikel, insbesondere agglomerierte Mikroplastik-Partikel, aufweisen, wobei das Hybridkieselgel durch Umsetzung des Alkyltrichlorsilans in dem Wasser und/oder Gewässer gebildet oder hergestellt ist und das Hybridkieselgel die Mikroplastik-Partikel, insbesondere die agglomerierten Mikroplastik-Partikel, wenigstens teilweise, insbesondere nur teilweise oder vollständig, einschließt oder umgibt.

Bevorzugt handelt es sich bei dem Alkyltrichlorsilan um ein ungeträgertes Alkyltrichlorsilan, d.h. um ein Alkyltrichlorsilan, welches nicht mit einem Trägermaterial, wie beispielsweise Aktivkohle oder einem Polyurethanschwamm, verbunden ist oder, anders ausgedrückt, welches frei von einem Trägermaterial, wie beispielsweise Aktivkohle oder einem Polyurethanschwamm, ist. Insbesondere kann es sich bei dem Alkyltrichlorsilan um ein Alkyltrichlorsilan handeln, welches nicht auf der Oberfläche eines Trägermaterials, insbesondere weder auf einer äußeren Oberfläche noch auf einer inneren Oberfläche eines Trägermaterials, gebunden ist.

Weiterhin ist es bevorzugt, wenn R, d.h. die Alkylgruppe R in der Formel I eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel I eine Alkylgruppe mit wenigstens 4 Kohlenstoffatomen ist.

Weiterhin ist es bevorzugt, wenn R, d.h. die Alkylgruppe R in der Formel I eine lineare Alkylgruppe, insbesondere mit wenigstens 4 Kohlenstoffatomen, ist.

Weiterhin ist es bevorzugt, wenn R, d.h. die Alkylgruppe R in der Formel I eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel I ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Insbesondere kann R, d.h. die Alkylgruppe R in der Formel I ausgewählt sein aus der Gruppe bestehend aus Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe, Hexadecylgruppe, Isomere davon und Isomerenmischungen davon.

Bevorzugt ist R, d.h. die Alkylgruppe R in der Formel I ausgewählt aus der Gruppe bestehend aus n-Butylgruppe, Isobutylgruppe (2-Methylpropylgruppe), n-Hexylgruppe, 2-Methylpentylgruppe, 3-Methylpentylgruppe, 2,2-Dimethylbutylgruppe, 2,3-Dimethylbutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Weiterhin ist es bevorzugt, wenn R, d.h. die Alkylgruppe R in der Formel I ausgewählt ist aus der Gruppe bestehend aus n-Butylgruppe, Isobutylgruppe, n-Octylgruppe und 2,4,4-Trimethylpentylgruppe.

Insbesondere kann R, d.h. die Alkylgruppe R in der Formel I ausgewählt sein aus der Gruppe bestehend aus n-Butylgruppe, Isobutylgruppe, n-Octylgruppe, 2,4,4-Trimethylpentylgruppe, Isomere davon und Isomerenmischungen davon.

Bevorzugt ist R, d.h. die Alkylgruppe R in der Formel I ausgewählt aus der Gruppe bestehend aus n-Butylgruppe, Isobutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Der Schritt a) kann grundsätzlich manuell, halbautomatisch oder (vollständig) automatisch durchgeführt werden. Bevorzugt wird der Schritt a) halbautomatisch oder (vollständig) automatisch durchgeführt.

Weiterhin ist es bevorzugt, wenn Schritt b) mittels Filtration, insbesondere mittels Rechen- oder Sandfang, vorgenommen wird.

Weiterhin ist es bevorzugt, wenn der Schritt a) und/oder der Schritt b) in einer Kläranlage, d.h. einer Abwasserbehandlungsanlage, insbesondere in einem Belebungsbecken und/oder einem Nachklärbecken davon, vorgenommen werden/wird.

Bei der Kläranlage bzw. Abwasserbehandlungsanlage kann es sich grundsätzlich um eine zentrale, d. h. stationäre, Kläranlage bzw. Abwasserbehandlungsanlage oder um eine dezentrale, d. h. mobile, Kläranlage bzw. Abwasserbehandlungsanlage, wie beispielsweise einen Container handeln.

Unter dem Ausdruck "Nachklärbecken" soll im Sinne der vorliegenden Erfindung eine Reinigungsstufe einer Kläranlage bzw. Abwasserbehandlungsanlage verstanden werden, welche üblicherweise zusammen mit einem Belebungsbecken, in welchem ein sogenannter Belebtschlamm durch Absetzen aus dem Abwasser abgetrennt wird, eine Prozesseinheit bildet.

Unter dem Ausdruck "Belebungsbecken" soll im Sinne der vorliegenden Erfindung eine Reinigungsstufe einer Kläranlage bzw. Abwasserbehandlungsanlage verstanden werden, in welcher Abwasserinhaltsstoffe (eines frischen Abwassers) durch Belüften eines mit Belebtschlamm versetzten Abwassers biotisch oxidativ abgebaut werden.

Unter dem Ausdruck "Belebtschlamm" soll im Sinne der vorliegenden Erfindung eine Ansammlung an Mikroorganismen verstanden werden, welche bei der aeroben biologischen Abwasserreinigung organische Stoffe abbauen. Der Belebtschlamm besteht vor allem aus Bakterien, Pilzen und Protozoen.

Weiterhin kann es bevorzugt sein, wenn der Schritt a) und/oder Schritt b) vor oder nach einem Umkehrosmoseschritt durchgeführt werden/wird.

Weiterhin kann es bevorzugt sein, wenn der Schritt a) und/oder Schritt b) vor oder nach einem Meersalzgewinnungsschritt durchgeführt werden/wird.

Weiterhin ist es bevorzugt, wenn vor Durchführen von Schritt a) und/oder während des Durchführens von Schritt a) das Wasser und/oder das Gewässer, insbesondere wenigstens abschnittsweise, bevorzugt nur abschnittsweise, in eine Drehbewegung versetzt werden/wird. Dadurch kann mit besonderem Vorteil eine für einen erfolgreichen Einschluss der Mikroplastik-Partikel vorgreifliche Lokalisation und/oder Aggregation der Mikroplastik-Partikel begünstigt werden.

Weiterhin ist es bevorzugt, wenn vor Durchführen von Schritt a) und/oder während des Durchführens von Schritt a) in dem Wasser und/oder dem Gewässer, insbesondere wenigstens abschnittsweise, bevorzugt nur abschnittsweise, ein Strudel erzeugt wird und das Alkyltrichlorsilan und/oder das Silsesquioxan in einen Sogtrichter des Strudels zugegeben werden/wird. Auf diese Weise kann eine für einen erfolgreichen Einschluss der Mikroplastik-Partikel erforderliche Lokalisation und/oder Aggregation der Mikroplastik-Partikel besonders effektiv erzielt werden.

Bezüglich weiterer Merkmale und Vorteile des Verfahrens, insbesondere des Alkyltrichlorsilans wird vollständig auf die im Rahmen des ersten Erfindungsaspekts gemachten Ausführungen Bezug genommen. Die dort im Übrigen gemachten Ausführungen gelten sinngemäß auch für das Verfahren gemäß zweitem Erfindungsaspekt.

Gemäß einem dritten Aspekt betrifft die Erfindung eine Einschluss- und/oder Inkalationsverbindung, welche ein Hybridkieselgel und Mikroplastik-Partikel, insbesondere agglomerierte Mikroplastik-Partikel, aufweist, wobei das Hybridkieselgel durch Umsetzung eines Alkyltrichlorsilans der nachstehenden Formel I

R-SiCl₃ (Formel I),

wobei
R eine Alkylgruppe, Si ein Siliziumatom und CI ein Chloratom bedeuten,
in Wasser und/oder einem Gewässer gebildet oder hergestellt ist und das Hybridkieselgel die Mikroplastik-Partikel, insbesondere die agglomerierten Mikroplastik-Partikel, wenigstens teilweise, insbesondere nur teilweise oder vollständig, einschließt oder umgibt.

Weiterhin ist es bevorzugt, wenn R, d.h. die Alkylgruppe R in der Formel I eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel I eine Alkylgruppe mit wenigstens 4 Kohlenstoffatomen ist.

Weiterhin ist es bevorzugt, wenn R, d.h. die Alkylgruppe R in der Formel I eine lineare Alkylgruppe, insbesondere mit wenigstens 4 Kohlenstoffatomen, ist.

Weiterhin ist es bevorzugt, wenn R, d.h. die Alkylgruppe R in der Formel I eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel I ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn R, d.h. die Alkylgruppe R in der Formel I ausgewählt ist aus der Gruppe bestehend aus n-Butylgruppe, Isobutylgruppe, n-Octylgruppe und 2,4,4-Trimethylpentylgruppe.

Die Einschluss- und/oder Inkalationsverbindung kann, abhängig von der Reaktivität des Alkyltrichlorsilans und/oder des Silsesquioxans und/oder abhängig von der Reaktions- oder Kontaktzeit, variable Partikeldurchmesser, insbesondere variable mittlere Partikeldurchmesser, aufweisen. Beispielsweise kann die Einschluss- und/oder Inkalationsverbindung einen Partikeldurchmesser, insbesondere einen mittleren Partikeldurchmesser, von 1 cm bis 6 cm aufweisen.

Bezüglich weiterer Merkmale und Vorteile der Einschluss- und/oder Inkalationsverbindung wird ebenfalls auf die bisherige Beschreibung, insbesondere auf die im Rahmen des ersten Erfindungsaspekts gemachten Ausführungen, Bezug genommen. Die dort im Übrigen gemachten Ausführungen gelten sinngemäß auch für die Einschluss- und/oder Inkalationsverbindung gemäß drittem Erfindungsaspekt.

Gemäß einem vierten Aspekt betrifft die Erfindung die Verwendung eines Kits zum Entfernen von Mikroplastik-Partikeln aus Wasser, insbesondere Abwasser und/oder Betriebswasser und/oder Sickerwasser und/oder Trinkwasser, und/oder einem Gewässer und/oder zum Behandeln.

Das Kit weist Folgendes auf:
- ein Alkyltrichlorsilan der nachstehenden Formel I

   R-SiCl₃ (Formel I),

   wobei
   R eine Alkylgruppe, Si ein Siliziumatom und CI ein Chloratom bedeuten.

Zusätzlich weist das Kit, insbesondere räumlich getrennt von dem Alkyltrichlorsilan gemäß Formel I wenigstens eine weitere Komponente auf. Die weitere Komponente ist ein Adsorptionsmittel, insbesondere ausgewählt aus der Gruppe bestehend aus Aktivkohle, Calcium-Silica-Hydrate, Polonit, Gesteine und Kombinationen von wenigstens zwei der genannten Adsorptionsmittel.

Es ist bevorzugt, wenn R, d.h. die Alkylgruppe R in der Formel I eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel I eine Alkylgruppe mit wenigstens 4 Kohlenstoffatomen ist.

Weiterhin ist es bevorzugt, wenn R, d.h. die Alkylgruppe R in der Formel I eine lineare Alkylgruppe, insbesondere mit wenigstens 4 Kohlenstoffatomen, ist.

Weiterhin ist es bevorzugt, wenn R, d.h. die Alkylgruppe R in der Formel I eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel I ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn R, d.h. die Alkylgruppe R in der Formel I ausgewählt ist aus der Gruppe bestehend aus n-Butylgruppe, Isobutylgruppe, n-Octylgruppe und 2,4,4-Trimethylpentylgruppe.

Bezüglich weiterer Merkmale und Vorteile des Kits wird ebenfalls vollständig auf die bisherige Beschreibung, insbesondere auf die im Rahmen des ersten Erfindungsaspekts gemachten Ausführungen, Bezug genommen. Die dort im Übrigen gemachten Ausführungen gelten sinngemäß auch für das Kit gemäß viertem Erfindungsaspekt.

Hier wird auch eine Wasserbehandlungsanlage beschrieben, die nicht erfindungsgemäß ist.

Die Wasserbehandlungsanlage weist eine Einrichtung zum Aufbewahren und/oder Zuführen einer Verbindung zum Entfernen von Mikroplastik-Partikeln aus Wasser, insbesondere Abwasser und/oder Betriebswasser und/oder Sickerwasser und/oder Trinkwasser, und/oder einem Gewässer und/oder zum Behandeln, insbesondere Reinigen, von Wasser, insbesondere Abwasser und/oder Betriebswasser und/oder Sickerwasser und/oder Trinkwasser, und/oder eines Gewässers auf.

Die Einrichtung enthält ein Alkyltrichlorsilan der nachstehenden Formel I

R-SiCl₃ (Formel I),

wobei
R eine Alkylgruppe, Si ein Siliziumatom und CI ein Chloratom bedeuten, bedeuten.

Bei der Wasserbehandlungsanlage handelt es sich bevorzugt um eine Kläranlage, d.h. um eine Abwasserbehandlungsanlage. Bei der Kläranlage bzw. Abwasserbehandlungsanlage kann es sich grundsätzlich um eine zentrale, d. h stationäre, Kläranlage bzw. Abwasserbehandlungsanlage oder um eine dezentrale, d. h. mobile, Kläranlage bzw. Abwasserbehandlungsanlage, wie beispielsweise einen Container, handeln.

Weiterhin ist es bevorzugt, wenn die Einrichtung einer letzten Reinigungsstufe, insbesondere einem Belebtschlammbecken und/oder einem Nachklärbecken, der Wasserbehandlungsanlage zugeordnet ist.

Weiterhin kann es sich bei der Wasserbehandlungsanlage um eine Umkehrosmoseanlage handeln.

Weiterhin kann es sich bei der Wasserbehandlungsanlage um eine Meersalzgewinnungsanlage handeln.

Weiterhin kann es sich bei der Wasserbehandlungsanlage um eine Trinkwassergewinnungsanlage handeln.

Es ist bevorzugt, wenn R, d.h. die Alkylgruppe R in der Formel I eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel I eine Alkylgruppe mit wenigstens 4 Kohlenstoffatomen ist.

Weiterhin ist es bevorzugt, wenn R, d.h. die Alkylgruppe R in der Formel I eine lineare Alkylgruppe, insbesondere mit wenigstens 4 Kohlenstoffatomen, ist.

Weiterhin ist es bevorzugt, wenn R, d.h. die Alkylgruppe R in der Formel I eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel I ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn R, d.h. die Alkylgruppe R in der Formel I ausgewählt ist aus der Gruppe bestehend aus n-Butylgruppe, Isobutylgruppe, n-Octylgruppe und 2,4,4-Trimethylpentylgruppe.

Bezüglich weiterer Merkmale und Vorteile der Wasserbehandlungsanlage wird ebenfalls vollständig auf die im Rahmen der bisherigen Beschreibung, insbesondere auf die im Rahmen des ersten Erfindungsaspekts gemachten Ausführungen, Bezug genommen. Die dort im Übrigen gemachten Ausführungen gelten sinngemäß auch für die Wasserbehandlungsanlage gemäß fünftem Erfindungsaspekt.

Weitere Merkmale und Vorteile der Erfindung ergeben sich aus der nachfolgenden Beschreibung von bevorzugten Ausführungsformen in Form von Figuren und Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### FIGURENKURZBESCHREIBUNG

In den Figuren ist Folgendes schematisch dargestellt:
- Fig.1:: das Reaktionsschema zur Herstellung eines Hybridkieselgels ausgehend von einem Alkyltrichlorsilan und Wasser und
- Fig. 2a-d:: die Strukturformeln einiger erfindungsgemäß besonders bevorzugter Alkyltrichlorsilane,

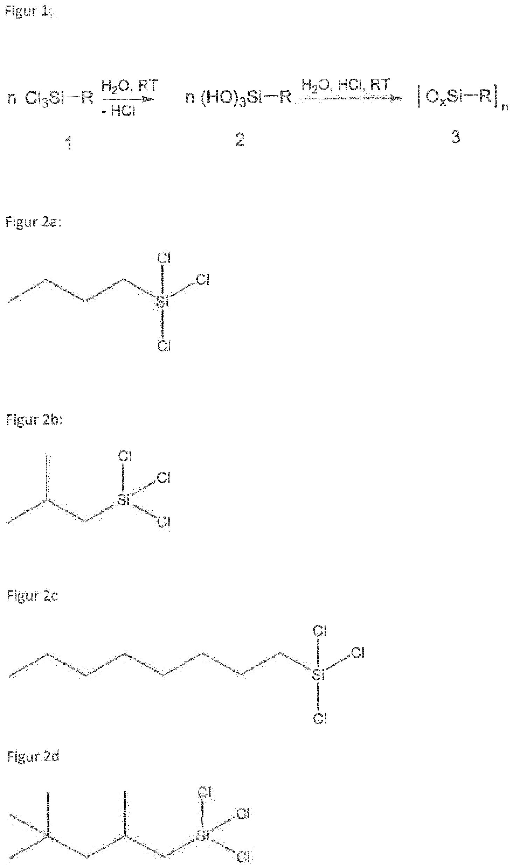

Fig. 1 zeigt schematisch das grundsätzliche Reaktionsschema, welches der Umsetzung eines Alkyltrichlorsilans 1 zu einem Hybridkieselgel 3, insbesondere makromolekularem Hybridkieselgel 3, welches zum Einschluss von Mikroplastik-Partikeln und/oder agglomerierten Mikroplastik-Partikeln tauglich ist, zugrunde liegt.

Bei Kontakt mit Wasser werden die Silicium-Chlor-Bindungen des Alkyltrichlorsilans 1 unter Entstehung von Salzsäure zu Silanolverbindungen 2 hydrolysiert. Aufgrund einer katalytischen Wirkung der freigesetzten Salzsäure durchlaufen die intermediär auftretenden Silanolverbindungen 2 rasch Kondensationsreaktionen, wobei das Hybridkieselgel 3 entsteht.

Über die Alkylgruppe des Alkyltrichlorsilans 1 ist es möglich, im Wasser und/oder einem Gewässer verteilte Mikroplastik-Partikel zu lokalisieren und zu aggregieren. Hierfür ist eine gewisse Anfangsstabilität des Alkyltrichlorsilans von Vorteil, damit eine ausreichende Lokalisation und Aggregation von Mikroplastik-Partikeln erfolgen kann, ehe der Einschluss der Mikroplastik-Partikel/aggregierten Mikroplastik-Partikel durch Ausbildung des Hybridkieselgels, insbesondere im Wege eines Sol-Gel-Prozesses, erfolgt.

Bei dem Alkyltrichlorsilan kann es sich insbesondere um n-Butyltrichlorsilan, Isobutyltrichlorsilan, n-Octyltrichlorsilan oder 2,4,4-Trimethylpentyltrichlorsilan handeln.

Fig. 2a zeigt die Strukturformel von n-Butyltrichlorsilan. Fig. 2b zeigt die Strukturformel von Isobutyltrichlorsilan. Fig. 2c zeigt die Strukturformel von n-Octyltrichlorsilan. Fig. 2d zeigt die Strukturformel von 2,4,4-Trimethylpentyltrichlorsilan. Die Verwendung dieser Alkyltrichlorsilane zur Entfernung von Mikroplastik-Partikeln aus Wasser und/oder einem Gewässer und/oder zur Behandlung, insbesondere Reinigung, von Wasser und/oder eines Gewässers ist erfindungsgemäß besonders bevorzugt.

### BEISPIELTEIL

### 1. Allgemeine Versuchsvorschrift zur Bildung von Agglomerationsverbindungen

### 1.1 Labormaßstab

100 mg Mikroplastikpulver (PE, PP oder Mischungen) (150 µm - 300 µm) und 1 I destilliertes Wasser wurden in ein 2 L Rundkoben vorgelegt und stark gerührt (24 h Quellprozess). Eine geringe Menge (ca 50-100 µmol) Agglomerationsreagenz wurde langsam hinzugefügt Das Reaktionsgemisch wurde bei 250 rpm und 25 °C gerührt. Nach 20 min, wurde das Gemisch gefiltert und der weiße Feststoff wurde bei 105°C für 24 h getrocknet. Das Silan bildete zunächst kleine Tröpfchen, welche im Gefäß zirkulierten (Lokalisation). Die Tröpfchen akkumulierten die Mikroplastikpartikel innerhalb von 3-4 min. Nach 2 min setzte die Gelbildung ein und ein großes Agglomerat wurde gebildet, welches an der Wasseroberfläche trieb (Fixierung). Nach 10 min war kein freies PE, PP oder Gemischen aus beidem mehr ungebunden im Reaktionsgefäß. Der pH-Wert des Wassers betrug 6-7.

### 1.2 Technikumsmaßstab

100 g Mikroplastikpulver (PP, PE/PP(1/1) (150 µm - 300 µm) und 2000 I Brauchwasser (Nachklärbecken) wurden in einen diskontinuierlichen 2000-L-Batch-Reaktor gefüllt. Anschließend wurde bei Raumtemperatur 24 h 250 U/min gerührt (Quellprozess). Der Agglomerationsprozess wurde eingeleitet in dem Agglomerationsreagenz (ca 50-100 mmol) hinzugegeben wurde und das Gemisch 24 h, bei Raumtemperatur und 250 U/min gerührt wurde. Die Mischung wurde filtriert und die agglomerierten weißen Feststoffe wurden bei 105 °C für 24 h getrocknet. Die agglomerierten Feststoffe hatten einen Durchmesser von 2-6 cm.

### 2. Allgemeine Informationen

GUR 4150 UHMW-PE Partikel wurden von Celanese bezogen. Weitere PE (LDPE, HDPE)und PP Mikroplastikpartikel wurden von der Firma LyondellBasell erworben.

Die in untenstehender Table 1 aufgeführten Alkyltrichlorsilane und Silsesquioxane wurden in den nachfolgend beschriebenen Versuchen eingesetzt. Die letzte Komponente der Tabelle 1 (Isooctyl POSS Cage Mixture) gehört nicht zur Erfindung.

**Tabelle 1: verwendete Alkyltrichlorsilane und Silsesquioxane**

| Name | CAS.no. |
|---|---|
| n-Butyltrichlorsilan | 7521-80-4 |
| Isobutyltrichlorsilan | 18169-57-8 |
| n-Octyltrichlorsilan | 5283-66-9 |
| Isooctyltrichlorsilan | 18379-25-4 |
| Isooctyl POSS Cage Mixture | 1472635-27-0 |

Environmental Scanning Electron Microscopes (ESEM)-Aufnahmen von Hybridkieselgelen (Probengröße bis zu 3 mm) wurden unter Verwendung eines FEI Quanta 250 ESEM (FEI Company, Hillsboro, USA) mit geringem Vakuum (60 und 80 Pa) aufgenommen. Um Bilder mit guter Qualität zu erzeugen, wurde ein Large-Field-Detektor (LFD) mit einer Beschleunigungsspannung zwischen 7 und 20 kV verwendet. Die IR-Spektren wurden mit FTIR Nicolet iS10 (Thermo, Dreieich, Deutschland) und FTIR Nicolet iS5 (Thermo, Dreieich, Deutschland) gemessen. Zusätzlich wurden IR-Spektren auf VARIAN FT-IR 630 mit ATR-Hecht (4000-400 cm-1) aufgenommen.

### 3. Allgemeine Versuchsvorschrift zur Bildung von Agglomerationsverbindungen

100 mg Mikroplastikpulver (PE, PP oder Mischungen) (150 µm - 300 µm) und 1 I destilliertes Wasser wurden in ein 2 L Rundkoben vorgelegt und stark gerührt. Eine geringe Menge (1*10⁻³ mol) Agglomerationsreagenz (Versuche 1-6) wurde langsam hinzugefügt .Das Reaktionsgemisch wurde bei 250 rpm und 25 °C gerührt. Nach 20 min wurde das Gemisch gefiltert und der weiße Feststoff wurde bei 60°C für 24 h getrocknet.

### 4. Versuche

### 4.1 Synthese einer Mikroplastik-Einschlussverbindung unter Verwendung von n-Octyltrichlorsilan

### 4.1.1 Synthese eines Hybridkieselgels auf Basis von n-Octyltrichlorsilan

1 L destilliertes Wasser wurde in einem 2 L Rundkolben vorgelegt und stark gerührt. 43.2 µmol n-Octyltrichlorsilan wurde langsam hinzugefügt Das Reaktionsgemisch wurde bei 250 rpm und 25 °C gerührt. Die Gelbildung setzte direkt bei Wasserkontakt ein und mehrere Agglomerate wurden gebildet. Nach 20 min wurde das Gemisch gefiltert, mit Wasser gewaschen und der weiße, sehr voluminöse Feststoff wurde bei 60 °C für 24 h getrocknet. Es entstand ein transparenter Feststoff.
EA: C 77.93, H 14.44, N 0
IR: n-octyl bei v (CH₂) 2951 cm⁻¹,2905 cm⁻¹, δ (CH) 1430-1485 cm⁻¹, v (Si-O-Si) 1106 cm⁻¹.

### 4.1.2 Synthese einer LDPE/HDPE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) PE gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.
EA: C 79.23, H 14.00, N 0
IR: PE v (CH₂) 2920 2870 cm⁻¹ (R= n-octyl wird überlagert v (CH₂) 2951 cm⁻¹,2905 cm⁻¹), δ (CH) 1430-1485 cm⁻¹, v (Si-O-Si) 1106 cm⁻¹.

### 4.1.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) PE gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.
EA: C 76.80, H 14.05, N 0
IR: PP v (CH₂) 2920 2870 cm⁻¹ (R= n-octyl wird überlagert v (CH₂) 2951 cm⁻¹, 2905 cm⁻¹, δ (CH) 1430-1485 cm⁻¹, v (Si-O-Si) 1106 cm⁻¹.

### 4.1.4 Synthese einer PE/PP-Mikroplastik-Einschlussverbindung

100 mg Mikroplastikpulver (LDPE/HDPE/PP 0,5/0,5/1) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) Mikroplastikgemisch gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

IR: PE/PP v (CH₂) 2920 2870 cm⁻¹ (R= n-octyl wird überlagert v (CH₂) 2951 cm⁻¹, 2905 cm⁻¹, δ (CH) 1430-1485 cm⁻¹, v (Si-O-Si) 1106 cm⁻¹.

### 4.2 Synthese einer Mikroplastik-Einschlussverbindung unter Verwendung von n-Butyltrichlorsilan

### 4.2.1 Synthese eines Hybridkieselgels auf Basis von n-Butyltrichlorsilan

1 L destilliertes Wasser wurde in einem 2 L Rundkolben vorgelegt und stark gerührt. 60.5 µmol n-Butyltrichlorsilan wurde langsam hinzugefügt Das Reaktionsgemisch wurde bei 250 rpm und 25 °C gerührt. Das Silan bildete kleine Tröpfchen, welche auf den Boden absanken. Die Gelbildung setzt nach 2 min ein und ein großes Agglomerat wurde gebildet. Nach 20 min, wurde das Gemisch gefiltert, mit Wasser gewaschen und der weiße Feststoff wird bei 60 °C für 24 h getrocknet. Es entstand ein weißer gelartiger Feststoff.
EA: C 41.16, H 07.93, N 0
IR: n-Butyl v (CH₂) 2950 cm⁻¹-2870 cm⁻¹, δ (CH) 1465-1407 cm⁻¹, v (Si-O-Si) 1202 cm⁻¹, (vSi-O) 874-688 cm⁻¹.

### 4.2.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 75 % (Massebilanz) PE gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.
EA: C 75.04, H 12.74, N 0
IR: PE v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.2.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 100 % (Massebilanz) PP gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.
EA: C 80.30, H 13.76, N 0
IR: PP v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.2.4 Synthese einer PE/PP-Mikroplastik-Einschlussverbindung

100 mg Mikroplastikpulver (LDPE/HDPE/PP; 0,5/0,5/1) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 100 % (Massebilanz) Mikroplastikgemisch gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.
EA: C 69.67, H 11.55, N 0
IR: PE/PP v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.3 Synthese einer Mikroplastik-Einschlussverbindung unter Verwendung von Isobutyltrichlorsilan

### 4.3.1 Synthese eines Hybridkieselgels auf Basis von Isobutyltrichlorsilan

1 L destilliertes Wasser wurde in einem 2 L Rundkolben vorgelegt und stark gerührt. 60 µmol Isobutyltrichlorsilan wurde langsam hinzugefügt Das Reaktionsgemisch wurde bei 250 rpm und 25 °C gerührt. Das Silan bildete kleine Tröpfchen und vermischte sich zunächst nicht mit Wasser. Die Gelbildung setzte nach 6 min ein. Nach 10 min war das Trichlorosilan vollständig zum Hybridkieselgel umgesetzt und kleine Aggregate waren sichtbar. Nach 20 Minuten nahmen die Aggregate an Größe zu. Die Größe der Aggregate betrug 1-3 mm. Das Gemisch wurde gefiltert, mit Wasser gewaschen und der weiße Feststoff wird bei 60 °C für 24 h getrocknet. Es entstand ein weißer Feststoff.
EA (gefunden): C 40.64, H 08.17, N 0
REM EDX: C 47.92, O 37.734, Si 14.35.
IR: v (CH₂) 2953 cm⁻¹,2869 cm⁻¹, δ (CH) 1465-1401 cm⁻¹, v (Si-O-Si) 1128 cm⁻¹-997, v (Si-O) 835-737 cm⁻¹.

### 4.3.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 6 min ein und ein großes Agglomerat wurde gebildet. Nach 10 min war das Trichlorsilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 76.36, H 14.15, N 0
REM EDX (gefunden): C 47.92, O 37.734, Si 14.35.
IR: PE v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.3.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt .Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 6 min ein und ein großes Agglomerat wurde gebildet. Nach 10 min war das Trichlorsilan vollständig zum Hybridkieselgel umgesetzt und kleine Aggregate mit dem gebundenen PP (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 73.72, H 13.46, N 0
REM EDX (gefunden): C 72.2, O 24.27, Si 3.53.
IR: PP v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.3.4: Synthese einer PE/PP-Mikroplastik-Einschlussverbindung

100 mg Mikroplastikpulver (LDPE/HDPE/PP, 05/0,5/1) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setztt nach 6 min ein und ein großes Agglomerat wurde gebildet. Nach 10 min war das Trichlorsilan vollständig zum Hybridkieselgel umgesetzt und kleine Aggregate mit dem gebundenen Mikroplastikgemisch (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 75.54, H 13.63, N 0
REM EDX (gefunden): C 46.04, O 40.51, Si 13.452.
IR: PE/PP v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.4 Synthese einer Mikroplastik-Einschlussverbindung unter Verwendung von Isooctyltrichlorsilan

### 4.4.1 Synthese eines Hybridkieselgels auf Basis von Isooctyltrichlorsilan

1 L destilliertes Wasser wurde in einem 2 L Rundkolben vorgelegt und stark gerührt. 43 µmol Isooctyltrichlorsilan wurde langsam hinzugefügt Das Reaktionsgemisch wurde bei 250 rpm und 25 °C gerührt. Das Silan bildete kleine Tröpfchen und vermischte sich zunächst nicht mit Wasser und sank zu Boden. Nach 5-10 s setzte die Gelbildung ein und ein großes Aggregat wurde sichtbar, welches an der Wasseroberfläche trieb. Nach 10 min war das Trichlorsilan vollständig zum Hybridkieselgel umgesetzt und kleine Aggregate waren sichtbar. Ein weißes Gel bildete sich. Nach 20 Minuten nahmen die Aggregate an Größe zu. Die Größe der Aggregate betrug 1-3 mm. Das Gemisch wurde gefiltert, mit Wasser gewaschen und der weiße Feststoff wurde bei 60 °C für 24 h getrocknet. Es entstand ein weißer Feststoff.
EA (gefunden): C 40.85, H 08.30, N 0
REM EDX (gefunden): C 49.43, O 40.16, Si 10.41.
IR: Isooctyl v (CH₂) 2951 cm⁻¹,2905 cm⁻¹, δ (CH) 1430-1485 cm⁻¹, v (Si-O-Si) 1106 cm⁻¹.

### 4.4.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorsilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 70.96, H 14.57, N 0
REM EDX (gefunden): C 79.55, O 15.79, Si 4.65.
IR: PE v (CH₂) 2920 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.4.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorosilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 74.95, H 13.59, N 0
REM EDX (gefunden): C 67.56, O 26.6, Si 5.84.
IR: PP v (CH₂) 2920 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

### 4.4.4 Synthese einer PE/PP-Mikroplastik-Einschlussverbindung

100 mg Mikroplastikpulver (LDPE/HDPE/PP, 0,5/0,5/1) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulieren die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorsilan vollständig zum Hybridkieselgel umgesetzt und kleine Aggregate mit dem gebundenen Mikroplastikgemisch (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.
EA (gefunden): C 78.21, H 14.31, N 0
REM EDX (gefunden): C 62.66, O 29.85, Si 7.485.
IR: PE/PP v (CH₂) 2920 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

### 4.5 Synthese einer Mikroplastik-Einschlussverbindung unter Verwendung von Isooctyl-T₈-Polyoktaedrischem Silsesquioxan. Dieses Beispiel ist nicht erfindungsgemäß.

### 4.5.1 Synthese eines Hybridkieselgels auf Basis von Isooctyl-T₈-Polyoktaedrischem Silsesquioxan

1 L destilliertes Wasser wurde in einem 2 L Rundkolben vorgelegt und stark gerührt. 7.64 µmol Isooctyl-T₈-Polyoktaedrisches Silsesquioxan wurde langsam hinzugefügt. Das Reaktionsgemisch wurde bei 250 rpm und 25 °C gerührt. Das hochviskose Silan bildete kleine Tröpfchen und vermischts sich nicht mit Wasser und schwamm auf. Bei Kontakt mit Wasser bildete sich zunächst kein sichtbares Hybridkieselgel. Durch starke Durchmischung war eine Veränderung der Farbe erkennbar. Der Stoff wurde von leicht gelblich zu einer weißlich transparenten hochviskosen Flüssigkeit. Das Gel wurde gefiltert, mit Wasser gewaschen und bei 60 °C für 24 h getrocknet. Es entand eine weißlich transparente hochviskose Flüssigkeit.
EA (gefunden): C 57.02, H 10.41
IR: Isooctyl v (CH₂) 2951 cm \2905 cm⁻¹, δ (CH) 1430-1485 cm⁻¹, v (Si-O-Si) 1106 cm⁻¹.

### 4.5.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselt. Nach 5-6 min war ein großes Agglomerat mit dem gebundenen PE (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand ein weiße hochviskose Flüssigkeit mit eingebundenen weißen Mikroplastikpartikeln.
EA (gefunden): C 69.51, H 12.18, N 0
REM EDX (gefunden): C 63.13, O 24.26, Si 12.37
IR: PE v (CH₂) 2920 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.5.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselte. Nach 5-6 min war ein großes Agglomerat mit dem gebundenen PP (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand eine weiße hochviskose Flüssigkeit mit eingebundenen weißen Mikroplastikpartikeln.
EA (gefunden): C 75.30, H 13.22, N 0
REM EDX (gefunden): C 63.5, O 20.92, Si 15.58.
IR: PP v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.5.4 Synthese einer PE/PP-Mikroplastik-Einschlussverbindung

100 mg Mikroplastikpulver (LDPE/HDPE/PP, 0,5/0,5/1) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselte. Nach 5-6 min war ein großes Agglomerat mit dem gebundenen Mikroplastikgemisch (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand ein weiße hochviskose Flüssigkeit/Feststoff mit eingebundenen weißen Mikroplastikpartikeln.
EA (gefunden): C 77.75, H 13.86, N 0
REM EDX (gefunden): C 63.43, O 21.38, Si 15.19.
IR: PE/PP v (CH₂) 2920 - 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

### 4.6 Synthese einer Mikroplastik-Einschlussverbindung unter Verwendung von Isooctyl-T8-Polyoktaedrischem Silsesquioxan im 2000 L Technikumsmaßstab. Dieses Beispiel ist nicht gemäß der Erfindung.

### 4.6.1 Synthese einer PE-Mikroplastik-Einschlussverbindung

100 g Mikroplastikpulver (LDPE/HDPE) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.
IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.6.2 Synthese einer PP-Mikroplastik-Einschlussverbindung

100 g Mikroplastikpulver (PP) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.
IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.6.3 Synthese einer PE/PP-Mikroplastik-Einschlussverbindung

100 g Mikroplastikpulver (LDPE/HDPE/PP, 0,5/0,5/1) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.
IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

## Patentansprüche

1. Verwendung
- eines Alkyltrichlorsilans der nachstehenden Formel I
R-SiCl₃ (Formel I),
wobei
R eine Alkylgruppe, Si ein Siliziumatom und CI ein Chloratom bedeuten,
zur Entfernung von Mikroplastik-Partikeln aus Wasser und/oder einem Gewässer.

2. Verwendung nach Anspruch 1, **dadurch gekennzeichnet, dass** es sich bei dem Alkyltrichlorsilan um ein ungeträgertes Alkyltrichlorsilan handelt.

3. Verwendung nach Anspruch 1 oder 2, **dadurch gekennzeichnet, dass** R eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

4. Verwendung nach einem der vorhergehenden Ansprüche, **dadurch gekennzeichnet**, das R eine lineare Alkylgruppe ist.

5. Verwendung nach einem der Ansprüche 1 bis 3, **dadurch gekennzeichnet, dass** R eine verzweigte Alkylgruppe ist.

6. Verwendung nach einem der vorhergehenden Ansprüche, **dadurch gekennzeichnet, dass** R ausgewählt ist aus der Gruppe bestehend aus n-Butylgruppe, Isobutylgruppe, Hexylgruppe, Isohexylgruppe, 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

7. Verwendung nach einem der vorhergehenden Ansprüche, **dadurch gekennzeichnet, dass** R ausgewählt ist aus der Gruppe bestehend aus n-Butylgruppe, Isobutylgruppe, n-Octylgruppe und 2,4,4-Trimethylpentylgruppe.

8. Verwendung nach einem der vorhergehenden Ansprüche, **dadurch gekennzeichnet, dass** es sich bei dem Alkyltrichlorsilan um einen Reinstoff oder ein Gemisch verschiedener Alkyltrichlorsilane handelt.

9. Verfahren zum Entfernen von Mikroplastik-Partikeln aus Wasser und/oder einem Gewässer, aufweisend die folgenden Schritte:
a) Dosieren oder Zugeben eines Alkyltrichlorsilans der nachstehenden Formel I
R-SiCl₃ (Formel I),
wobei
R eine Alkylgruppe, Si ein Siliziumatom und CI ein Chloratom bedeuten,
zu einem mikroplastikpartikelhaltigen Wasser und/oder mikroplastikpartikelhaltigen Gewässer und
b) Entfernen von nach Zugeben des Alkyltrichlorsilans entstandenen Einschlussverbindungen aus dem Wasser und/oder Gewässer, wobei die Einschlussverbindungen jeweils ein Hybridkieselgel und Mikroplastik-Partikel aufweisen, wobei das Hybridkieselgel durch Umsetzung des Alkyltrichlorsilans in dem Wasser und/oder Gewässer gebildet ist und die Mikroplastik-Partikel wenigstens teilweise einschließt.

10. Verfahren nach Anspruch 9, weiter **gekennzeichnet durch** die Merkmale des kennzeichnenden Teils wenigstens eines der Ansprüche 2 bis 8.

11. Einschlussverbindung, aufweisend ein Hybridkieselgel und Mikroplastik-Partikel, wobei das Hybridkieselgel durch Umsetzung eines Alkyltrichlorsilans der nachstehenden Formel I
R-SiCl₃ (Formel I),
wobei
R eine Alkylgruppe, Si ein Siliziumatom und CI ein Chloratom bedeuten,
in Wasser und/oder einem Gewässer gebildet ist und die Mikroplastik-Partikel wenigstens teilweise einschließt.

12. Verwendung eines Kits zum Entfernen von Mikroplastik-Partikeln aus Wasser und/oder einem Gewässer,
aufweisend räumlich voneinander getrennt ein Alkyltrichlorsilan nach einem der Ansprüche 1 bis 8 und wenigstes eine weitere Komponente, wobei die weitere Komponente ein Adsorptionsmittel, insbesondere ausgewählt aus der Gruppe bestehend aus Aktivkohle, Calcium-Silica-Hydrate, Polonit, Gesteine und Kombinationen von wenigstens zwei der genannten Adsorptionsmittel, ist.

## Claims

1. Use
- of an alkyltrichlorosilane of the following formula I
R-SiCl₃ (formula I),
wherein
R represents an alkyl group, Si represents a silicon atom and Cl represents a chlorine atom,
for the removal of microplastic particles from water and/or a body of water.

2. Use as claimed in claim 1, **characterized in that** the alkyltrichlorosilane is a carrier-free alkyltrichlorosilane.

3. Use as claimed in claim 1 or 2, **characterized in that** R is an alkyl group having 1 carbon atom to 16 carbon atoms, in particular 3 carbon atoms to 14 carbon atoms, preferably 4 carbon atoms to 8 carbon atoms.

4. Use as claimed in one of the preceding claims, **characterized in that** R is a linear alkyl group.

5. Use as claimed in one of claims 1 to 3, **characterized in that** R is a branched alkyl group.

6. Use as claimed in one of the preceding claims, **characterized in that** R is selected from the group consisting of n-butyl group, isobutyl group, hexyl group, isohexyl group, 2,4,4-trimethylpentyl group, n-octyl group, 6-methylheptyl group, nonyl group, decyl group, dodecyl group, tetradecyl group and hexadecyl group.

7. Use as claimed in one of the preceding claims, **characterized in that** R is selected from the group consisting of n-butyl group, isobutyl group, n-octyl group and 2,4,4-trimethylpentyl group.

8. Use as claimed in one of the preceding claims, **characterized in that** the alkyltrichlorosilane is a pure substance or a mixture of different alkyltrichlorosilanes.

9. Method for the removal of microplastic particles from water and/or a body of water, the method having the following steps:
a) metering or adding an alkyltrichlorosilane of the following formula I
R-SiCl₃ (formula I),
wherein
R represents an alkyl group, Si represents a silicon atom and Cl represents a chlorine atom,
to a microplastic particle-containing water and/or a microplastic particle-containing body of water, and
b) removing, from the water and/or the body of water, inclusion compounds formed after addition of the alkyltrichlorosilane, wherein the inclusion compounds each comprise a hybrid silica gel and microplastic particles, wherein the hybrid silica gel is formed by reaction of the alkyltrichlorosilane in the water and/or body of water and encloses the microplastic particles at least partially.

10. Method as claimed in claim 9, further **characterized by** the features of the characterizing part of at least one of claims 2 to 8.

11. Inclusion compound, comprising a hybrid silica gel and microplastic particles, wherein the hybrid silica gel is formed by reaction of an alkyltrichlorosilane of the following formula I
R-SiCl₃ (formula I),
wherein
R represents an alkyl group, Si represents a silicon atom and Cl represents a chlorine atom,
in water and/or a body of water and at least partially encloses the microplastic particles.

12. Use of a kit for the removal of microplastic particles from water and/or a body of water,
said kit having, spatially separated from one another, an alkyltrichlorosilane as claimed in one of claims 1 to 8 and at least one further component, wherein the further component is an adsorbent, in particular selected from the group consisting of activated carbon, calcium-silica hydrates, polonite, rocks and combinations of at least two of the specified adsorbents.

## Revendications

1. Utilisation
- d'un alkyltrichlorosilane ayant la Formule I ci-après
R-SiCl₃ (Formule I),
dans laquelle R représente un groupe alkyle, Si un atome de silicium et Cl un atome de chlore,
pour éliminer de l'eau et/ou d'une masse d'eau les particules microplastiques.

2. Utilisation selon la revendication 1, **caractérisée en ce que** l'alkyltrichlorosilane est un alkyltrichlorosilane non supporté.

3. Utilisation selon la revendication 1 ou 2, **caractérisée en ce que** R représente un groupe alkyle ayant un atome de carbone à 16 atomes de carbone, en particulier 3 atomes de carbone à 14 atomes de carbone, de préférence 4 atomes de carbone à 8 atomes de carbone.

4. Utilisation selon l'une des revendications précédentes, **caractérisée en ce que** R représente un groupe alkyle linéaire.

5. Utilisation selon l'une des revendications 1 à 3, **caractérisée en ce que** R représente un groupe alkyle ramifié.

6. Utilisation selon l'une des revendications précédentes, **caractérisée en ce que** R est choisi dans le groupe consistant en le groupe n-butyle, le groupe isobutyle, le groupe hexyle, le groupe isohexyle, le groupe 2,4,4-triméthylpentyle, le groupe n-octyle, le groupe 6-méthylheptyle, le groupe nonyle, le groupe décyle, le groupe dodécyle, le groupe tétradécyle et le groupe hexadécyle.

7. Utilisation selon l'une des revendications précédentes, **caractérisée en ce que** R est choisi dans le groupe consistant en le groupe n-butyle, le groupe isobutyle, le groupe n-octyle et le groupe 2,4,4-triméthylpentyle.

8. Utilisation selon l'une des revendications précédentes, **caractérisée en ce que** l'alkyltrichlorosilane est une substance pure ou un mélange de différents alkyltrichlorosilanes.

9. Procédé d'élimination, à partir de l'eau et/ou d'une masse d'eau, des particules microplastiques, comprenant les étapes suivantes :
a) dosage ou addition d'un alkyltrichlorosilane ayant la Formule I ci-après
R-SiCl₃ (Formule I),
dans laquelle R représente un groupe alkyle, Si un atome de silicium et Cl un atome de chlore,
à une eau contenant des particules microplastiques et/ou des masses d'eau contenant des particules microplastiques et
b) élimination, à partir de l'eau et/ou de la masse d'eau, des composés d'inclusion formés après addition de l'alkyltrichlorosilane, les composés d'inclusion comprenant chacun un gel de silice hybride et des particules microplastiques, le gel de silice hybride étant formé par réaction de l'alkyltrichlorosilane dans l'eau et/ou la masse d'eau, et inclut au moins partiellement les particules microplastiques.

10. Procédé selon la revendication 9, **caractérisé par** les caractéristiques de la partie caractéristique d'au moins l'une des revendications 2 à 8.

11. Composé d'inclusion, présentant un gel de silice hybride et des particules microplastiques, le gel de silice hybride étant formé par réaction d'un alkyltrichlorosilane ayant la Formule I ci-après
R-SiCl₃ (Formule I),
dans laquelle
R représente un groupe alkyle, Si un atome de silicium et Cl un atome de chlore,
dans de l'eau et/ou une masse d'eau, et inclut au moins partiellement les particules microplastiques.

12. Utilisation d'un kit pour éliminer, à partir d'eau et/ou d'une masse d'eau, des particules microplastiques, comprenant, spatialement séparés l'un de l'autre, un alkyltrichlorosilane selon l'une des revendications 1 à 8 et au moins un autre composant, l'autre composant étant un adsorbant, en particulier choisi dans le groupe consistant en le charbon actif, le silicate de calcium hydraté, la polonite, les roches et les combinaisons d'au moins deux des adsorbants mentionnés.
